(19) Europäisches Patentamt
European Patent Office
Office européen des brevets

(11) Veröffentlichungsnummer : **0 190 561**
**B1**

(12) # EUROPÄISCHE PATENTSCHRIFT

(45) Veröffentlichungstag der Patentschrift : **09.11.88**

(51) Int. Cl.⁴ : **A 01 N 43/653** // (A01N43/653, 33:12)

(21) Anmeldenummer : **86100206.1**

(22) Anmeldetag : **09.01.86**

(54) **Mittel zur Regulierung des Pflanzenwachstums.**

(30) Priorität : **22.01.85 DE 3501856**

(43) Veröffentlichungstag der Anmeldung : **13.08.86 Patentblatt 86/33**

(45) Bekanntmachung des Hinweises auf die Patenterteilung : **09.11.88 Patentblatt 88/45**

(84) Benannte Vertragsstaaten : **BE DE FR GB NL**

(56) Entgegenhaltungen :
**EP-A- 0 057 357**
**EP-A- 0 127 944**
**GB-A- 2 081 700**

(73) Patentinhaber : **BAYER AG**
**Konzernverwaltung RP Patentabteilung**
**D-5090 Leverkusen 1 Bayerwerk (DE)**

(72) Erfinder : **Lürssen, Klaus, Dr.**
**August-Kierspel-Strasse 151**
**D-5060 Bergisch - Gladbach 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 190 561 B1

Jouve, 18, rue St-Denis, 75001 Paris, France

**Beschreibung**

Die vorliegende Erfindung betrifft neue Wirkstoffkombinationen, die aus dem bekannten 1-Cyclohexyl-4,4-dimethyl-2-(1,2,4-triazol-1-yl)-pent-1-en-3-ol einerseits und aus dem bekannten 2-Chlorethyl-trimethylammoniumchlorid andererseits bestehen und sehr gut zur Regulierung des Pflanzenwachstums geeignet sind.

Es ist bereits bekannt geworden, daß 1-Cyclohexyl-4,4-dimethyl-2-(1,2,4-triazol-1-yl)-pent-1-en-3-ol pflanzenwachstumsregulierende Eigenschaften besitzt (vgl. EP-OS 0 015 387). Die Wirksamkeit dieses Stoffes ist gut ; sie läßt jedoch im Falle einiger Indikationen bei niedrigen Aufwandmengen noch zu wünschen übrig.

Ferner ist schon bekannt, daß 2-Chlorethyltrimethyl-ammoniumchlorid zur Regulierung des Pflanzenwachstums eingesetzt werden kann (vgl. US-PS 3 156 554). Die Wirksamkeit dieses Stoffes ist aber bei niedrigen Aufwandmengen nicht immer befriedigend.

Es wurde nun gefunden, daß die neuen Wirkstoffkombinationen aus

(a) 1-Cyclohexyl-4,4-dimethyl-2-(1,2,4-triazol-1-yl)-pent-1-en-3-ol der Formel

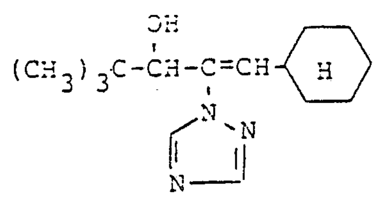

(I)

und

(b) 2-Chlorethyl-trimethyl-ammoniumchlorid der Formel

$$Cl-CH_2-CH_2-\overset{\oplus}{N}(CH_3)_3 \quad Cl^{\ominus} \qquad (II)$$

sehr gut zur Regulierung des Pflanzenwachstums geeignet sind.

Überraschenderweise ist die pflanzenwuchsregulierende Wirksamkeit der erfindungsgemäßen Wirkstoffkombinationen wesentlich höher als die Summe der Wirkungen der einzelnen Wirkstoffe. Es liegt also ein nicht vorhersehbarer synergistischer Effekt vor und nicht nur eine Wirkungsergänzung.

Die Verbindung der Formel (I) besitzt ein asymmetrisch substituiertes Kohlenstoffatom und kann deshalb in Form eines Racemates oder auch in den beiden optischen Isomerenformen auftreten. Außerdem kann die Verbindung der Formel (I) je nach der Stellung der Substituenten an der C=C-Doppelbindung auch in zwei geometrischen Isomerenformen vorliegen. Die Erfindung betrifft sowohl die Isomerengemische als auch die einzelnen Isomeren. Bevorzugt ist das racemische Isomerengemisch und der (-)-Antipode des (E)-1-Cyclohexyl-4,4-dimethyl-3-hydroxy-2-(1,2,4-triazol-1-yl)-pent-1-ens der Formel

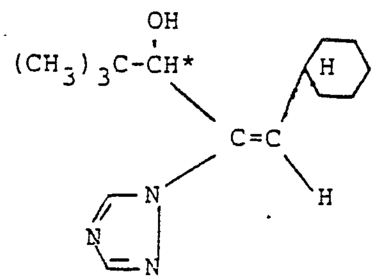

(Ia)

Unter dem (-)-Antipoden ist hier dasjenige Enantiomere zu verstehen, das die Schwingungsebene von linear polarisiertem Licht der Natrium-D-Linie nach links dreht.

Die in den erfindungsgemäßen Wirkstoffkombinationen enthaltenen Wirkstoffe sind bereits bekannt (vgl. EP-OS 0 015 387, DE-OS 3 302 122 und US-PS 3 156 554).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,05 bis 5 Gewichtsteile, vorzugsweise 0,1 bis 4 Gewichtsteile an Wirkstoff der Formel (II).

Die erfindungsgemäßen Wirkstoffkombinationen greifen in den Metabilismus der Pflanzen ein und können deshalb zur Regulierung des Pflanzenwachstums eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Pflanzenwuchsregulierende Stoffe können zum Beispiel zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Straßenrändern, auf Flughäfen oder in Obstanlagen reduziert werden. Von Bedeutung ist auch die Hemmung des Wuchses von krautigen und holzigen Pflanzen an Straßenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens (« Lagerns » der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne daß die Gefahr besteht, daß das Getreide lagert.

Eine Hemmung des vegetativen Wachstums ermöglicht bei vielen Kulturpflanzen eine dichtere Anpflanzung, so daß Mehrerträge bezogen auf die Bodenfläche erzielt werden können. Ein Vorteil der so erzielten kleineren Pflanzen ist auch, daß die Kultur leichter bearbeitet und beerntet werden kann.

Eine Hemmung des vegetativen Wachstums der Pflanzen kann auch dadurch zu Ertragssteigerungen führen, daß die Nährstoffe und Assimilate in stärkerem Maße der Blüten- und Fruchtbildung zugute kommen als den vegetativen Pflanzenteilen.

Durch den Einsatz von Wachstumsregulatoren läßt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z. B. großes Interesse im Tabakanbau oder bei der Anpflanzung von Tomaten.

Durch Anwendung von Wachstumsregulatoren kann ferner die Samen- oder Knospenruhe der Pflanzen beeinflußt werden, so daß die Pflanzen, wie z. B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schließlich kann mit Wachstumsregulatoren eine Resistenz der Pflanzen gegen Frost, Trockenheit oder hohen Salzgehalt des Bodens induziert werden. Hierdurch wird die Kultivierung von Pflanzen in Gebieten möglich, die hierzu normalerweise ungeeignet sind.

Die erfindungsgemäßen Wirkstoffkombinationen zeigt vor allem eine starke pflanzenwuchshemmende Wirksamkeit, insbesondere bei monokotylen Pflanzen, wie zum Beispiel Getreide und Gras.

Unter Getreide sind im vorliegenden Fall alle üblichen Getreidearten zu verstehen. Hierzu gehören vorzugsweise Hafer, Roggen, Gerste, Weizen und Reis.

Die erfindungsgemäßen Wirkstoffkombinationen können in die üblichen Formulierungen übergeführt werden, wie Lösungen, Emulsionen, Suspensionen, Pulver und Granulate.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln. Im Falle der Benutzung von Wasser als Streckmittel können z. B. auch organische Lösungsmittels als Hilfslösungsmittel verwendet werden. Als flüssige Lösungsmittel kommen im wesentlichen in Frage : Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage :

z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgiermittel kommen in Frage :

z. B. nichtionogene und anionische Emulgatoren, wie Polyoxyethylen-Fettsäure-Ester, Polyoxyethylen-Fettalkohol-Ether, z. B. Alkylarylpolyglykol-ether, Alkylsulfonate, Alkylsulfate, Arylsulfonate sowie Eiweißhydrolysate ; als Dispergiermittel kommen in Frage :

z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z. B. durch Gießen, Verspritzen, Versprühen, Verstreuen, usw...

Die Wirkstoffkonzentrationen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wirkstoffkombinationen in einem bevorzugten Zeitraum vorgenommen wird, dessen genaue Abgrenzung sich nach den klimatischen und vegetativen Gegebenheiten richtet.

Die gute pflanzenwuchsregulierende Wirkung der erfindungsgemäßen Wirkstoffkombinationen geht aus den nachfolgenden Beispielen hervor. Während die einzelnen Wirkstoffe in der wuchsregulierenden Wirkung Schwächen aufweisen, zeigen die Kombinationen eine Wirkung, die über eine einfache Wirkungssummierung hinausgeht.

Ein synergistischer Effekt liegt bei Wachstumsregulatoren immer dann vor, wenn die wachstumsregulierende Wirkung der Wirkstoffkombinationen größer ist als die Summe der Wirkungen der einzeln applizierten Wirkstoffe.

Die zu erwartende Wirkung für eine gegebene Kombination zweier Pflanzenwuchsregulatoren kann (vgl. Colby, S.R., « Calculating synergistic and antagonistic responses of herbicide combinations », Weeds 15, Seiten 20-22, 1967) wie folgt berechnet werden :

Wenn X = % Wuchsregulierung durch Wirkstoff A bei p kg/ha Aufwandmenge,
und Y = % Wuchsregulierung durch Wirkstoff B bei q kg/ha Aufwandmenge,
und E = die erwartete Wuchsregulierung durch die Wirkstoffe A und B bei p und q kg/ha Aufwandmenge,
dann ist

$$E = X + Y - (X \cdot Y/100)$$

Ist die tatsächliche Wuchshemmung größer als berechnet, so ist die Kombination in ihrer Wirkung überadditiv, d. h. es liegt ein synergistischer Effekt vor.

Aus den Tabellen der Beispiele A und B geht eindeutig hervor, daß die gefundene wuchsregulierende Wirkung der erfindungsgemäßen Wirkstoffkombinationen größer ist als die berechnete, d. h., daß ein synergistischer Effekt vorliegt.

## Beispiel A

Wuchshemmung bei Weizen

Lösungsmittel : 30 Gewichtsteile Dimethylformamid
Emulgator : 1 Gewichtsteil Polyoxyethylen-Sorbitan-Monolaurat

Zur Herstellung einer zweckmäßigen Zubereitung des racemischen Wirkstoffes der Formel (I) vermischt man 1 Gewichtsteil dieses Wirkstoffes mit den angegebenen Mengen an Lösungsmittel und Emulgator und füllt mit Wasser auf die gewünschte Konzentration auf.

Zur Herstellung einer zweckmäßigen Zubereitung des Wirkstoffes der Formel (II) wird eine handelsübliche flüssige Formulierung, die 46 Gewichtsprozent dieses Wirkstoffes enthält, mit Wasser auf die gewünschte Konzentration aufgefüllt.

Zur Herstellung einer zweckmäßigen Zubereitung an einer erfindungsgemäßen Wirkstoffkombination vermischt man 1 Gewichtsteil racemischen Wirkstoff der Formel (I) mit den angegebenen Mengen an Lösungsmittel und Emulgator, gibt die gewünschte Menge an handelsüblicher flüssiger Formulierung, die 46 Gewichtsprozent an Wirkstoff der Formel (II) enthält, hinzu und füllt mit Wasser auf die gewünschte Konzentration auf.

Weizenpflanzen werden im Gewächshaus in Töpfen mit einer Oberfläche von je 100 $cm^2$ bis zum 2-Blatt-Stadium angezogen. In diesem Stadium werden die Pflanzen mit umgerechnet 500 l/ha der

Wirkstoffzubereitung besprüht. Nach 3 Wochen wird bei allen Pflanzen der Zuwachs gemessen und die Wuchshemmung in Prozent des Zuwachses der Kontrollpflanzen berechnet. Es bedeuten 100 % Wuchshemmung den Stillstand des Wachstums und 0 % ein Wachstum entsprechend dem der Kontrollpflanzen.

Wirkstoffe, Aufwandmengen und Testergebnisse gehen aus der folgenden Tabelle hervor.

Tabelle A : Wuchshemmung bei Weizen

| Wirkstoffe bzw. Kombination | Wirkstoff-aufwandmenge kg/ha | Wuchshemmung in % gef.* | ber.* |
|---|---|---|---|
| (I) | 0,5 | 21 | - |
| | 1,0 | 35 | - |
| (II) | 0,5 | 50 | - |
| | 1,0 | 59 | - |
| (I) + (II) | 0,25 + 0,25 | 59 | - |
| (I) + (II) | 0,5 + 0,5 | 77 | 60,5 |

*) gef. = gefundene Wuchshemmung
*) ber. = nach der oben angegebenen Colby-Formel berechnete Wuchshemmung

Beispiel B

Wuchshemmung bei Roggen

Lösungsmittel : 30 Gewichtsteile Dimethylformamid
Emulgator : 1 Gewichtsteil Polyoxyethylen-Sorbitan-Monolaurat

Zur Herstellung einer zweckmäßigen Zubereitung des racemischen Wirkstoffes der Formel (I) vermischt man 1 Gewichtsteil dieses Wirkstoffes mit den angegebenen Mengen an Lösungsmittel und Emulgator und füllt mit Wasser auf die gewünschte Konzentration auf.

Zur Herstellung einer zweckmäßigen Zubereitung des Wirkstoffes der Formel (II) wird eine handelsübliche flüssige Formulierung, die 46 Gewichtsprozent dieses Wirkstoffes enthält, mit Wasser auf die gewünschte Konzentration aufgefüllt.

Zur Herstellung einer zweckmäßigen Zubereitung an einer erfindungsgemäßen Wirkstoffkombination vermischt man 1 Gewichtsteil racemischen Wirkstoff der Formel (I) mit den angegebenen Mengen an Lösungsmittel und Emulgator, gibt die gewünschte Menge an handelsüblicher flüssiger Formulierung, die 46 Gewichtsprozent an Wirkstoff der Formel (II) enthält, hinzu und füllt mit Wasser auf die gewünschte Konzentration auf.

Roggenpflanzen werden im Gewächshaus in Töpfen mit einer Oberfläche von je 100 $cm^2$ bis zum 2-Blatt-Stadium angezogen. In diesem Stadium werden die Pflanzen mit umgerechnet 500 l/ha der Wirkstoffzubereitung besprüht. Nach 3 Wochen wird bei allen Pflanzen der Zuwachs gemessen und die Wuchshemmung in Prozent des Zuwachses der Kontrollpflanzen berechnet. Es bedeuten 100 % Wuchshemmung den Stillstand des Wachstums und 0 % ein Wachstum entsprechend dem der Kontrollpflanzen.

Wirkstoffe, Aufwandmengen und Testergebnisse gehen aus der folgenden Tabelle hervor.

Tabelle B : Wuchshemmung bei Roggen

| Wirkstoffe bzw. Kombinationen | Wirkstoffaufwandmenge kg/ha | Wuchshemmung in % |
|---|---|---|
| (I) | 0,5 | 16 |
| | 1,0 | 25 |
| (II) | 0,5 | 16 |
| | 1,0 | 15 |
| (I) + (II) | 0,25 + 0,25 | 23 |
| (I) + (II) | 0,5 + 0,5 | 30 |

**Patentansprüche**

1. Mittel zur Regulierung des Pflanzenwachstums, gekennzeichnet durch einen Gehalt an einer Wirkstoffkombination bestehend aus

(a) 1-Cyclohexyl-4,4-dimethyl-2-(1,2,4-triazol-1-yl)-pent-1-en-3-ol der Formel

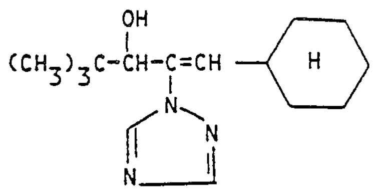

(I)

und

(b) 2-Chlorethyl-trimethyl-ammoniumchlorid der Formel

$$Cl-CH_2-CH_2-\overset{\oplus}{N}(CH_3)_3 \quad Cl^{\ominus}$$ (II)

2. Mittel gemäß Anspruch 1, dadurch gekennzeichnet, daß in den Wirkstoffkombinationen das Gewichtsverhältnis von Wirkstoff der Formel (I) zu Wirkstoff der Formel (II) zwischen 1 : 0,05 und 1 : 5, vorzugsweise zwischen 1 : 0,1 und 1 : 4 liegt.

3. Verfahren zur Regulierung des Pflanzenwachstums, dadurch gekennzeichnet, daß man Wirkstoffkombinationen gemäß Anspruch 1 oder 2 auf die Pflanzen und/oder deren Lebensraum einwirken läßt.

4. Verwendung von Wirkstoffkombinationen gemäß Anspruch 1 oder 2 zur Regulierung des Pflanzenwachstums.

5. Verfahren zur Herstellung von Mitteln zur Regulierung des Pflanzenwachstums, dadurch gekennzeichnet, daß man Wirkstoffkombinationen gemäß Anspruch 1 oder 2 mit Streckmitteln und/oder oberflächenaktiven Mitteln vermischt.

**Claims**

1. Agent for regulating plant growth, characterized in that it contains an active compound combination consisting of

(a) 1-cyclohexyl-4,4-dimethyl-2-(1,2,4-triazol-1-yl)-pent-1-en-3-ol of the formula

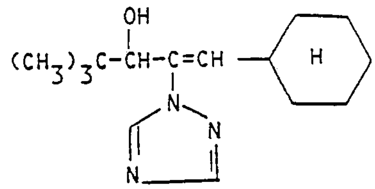

(I)

and

(b) 2-chloroethyl-trimethyl-ammonium chloride of the formula

$$Cl-CH_2-CH_2-\overset{\oplus}{N}(CH_3)_3 \quad Cl^{\ominus} \qquad (II)$$

2. Agent according to Claim 1, characterized in that in the active compound combinations the weight ratio of active compound of the formula (I) to active compound of the formula (II) is between 1 : 0.05 and 1 : 5, preferably between 1 : 0.1 and 1 : 4.

3. Process for regulating plant growth, characterized in that active compound combinations according to Claim 1 or 2 are allowed to act on the plants and/or their habitat.

4. Use of active compound combinations according to Claim 1 or 2 for regulating plant growth.

5. Process for the preparation of agents for regulating plant growth, characterized in that active compound combinations according to Claim 1 or 2 are mixed with extenders and/or surface-active agents.

**Revendications**

1. Produit pour réguler la croissance des plantes (substance de croissance), caractérisé en ce qu'il contient une combinaison de substances actives consistant en :

(a) le 1-cyclohexyl-4,4-diméthyl-2-(1,2,4-triazole-1-yl)-penta-1-ène-3-ol de formule

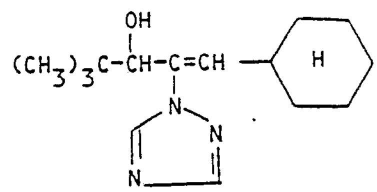

(I)

et

(b) le chlorure de 2-chloréthyl-triméthyl-ammonium de formule

$$Cl-CH_2-CH_2-\overset{\oplus}{N}(CH_3)_3 \quad Cl^{\ominus} . \qquad (II)$$

2. Produit selon la revendication 1, caractérisé en ce que, dans les combinaisons des substances actives, le rapport pondéral de la substance active de formule (I) à la substance active de formule (II) se situe entre 1 : 0,05 et 1 : 5, avantageusement entre 1 : 1 et 1 : 4.

3. Procédé pour réguler la croissance des plantes, caractérisé en ce qu'on fait agir des combinaisons de substances actives, selon la revendication 1 ou 2, sur les plantes et/ou sur leur biotope.

4. Utilisation des combinaisons de substances actives selon la revendication 1 ou 2 pour réguler la croissance des plantes.

5. Procédé de préparation de produits pour réguler la croissance des plantes, caractérisé en ce qu'on mélange des combinaisons de substances actives, selon la revendication 1 ou 2, avec des agents d'allongement et/ou des produits tensioactifs.